# EUROPÄISCHE PATENTSCHRIFT

(11) **EP 2 868 985 B1**
(45) Veröffentlichungstag und Bekanntmachung des Hinweises auf die Patenterteilung: **09.11.2016**
(21) Anmeldenummer: 14185147.7
(22) Anmeldetag: 17.09.2014
(51) Int. Cl.: F24D 17/00, F24D 19/10

(54) **Trinkwassererwärmungsanlage und Verfahren zum Betreiben einer Trinkwassererwärmungsanlage**
Drinking water heating assembly and method for operating a drinking water heating assembly
Installation de chauffage d'eau potable et procédé de fonctionnement d'une installation de chauffage d'eau potable

(30) Priorität: 31.10.2013 DE 102013222221
(43) Veröffentlichungstag der Anmeldung: 06.05.2015
(73) Patentinhaber: ROBERT BOSCH GMBH, 70442 Stuttgart (DE)
(72) Erfinder: Moos, Sebastian, 59939 Olsberg (DE); Doehler, Marcus, 04229 Leipzig (DE)

(56) Entgegenhaltungen:
- DE-A1- 10 201 396
- FR-A1- 2 864 786

## Beschreibung

Die Erfindung betrifft eine Trinkwassererwärmungsanlage nach dem Oberbegriff des Anspruchs 1. Das Dokument DE10201396 offenbart eine Trinkwassererwärmungsanlage gemäß dem Oberbegriff des Anspruchs 1. In Bezug auf Anspruch 8 offenbart dieses Dokument auch ein Verfahren zum Betreiben einer Trinkwassererwärmungsanlage, mit einem Desinkfektionsmodus.

Derartige Trinkwassererwärmungsanlagen dienen zur Trinkwasservorwärmung in Gebäuden mit einem höheren Tagesbedarf beispielsweise ab 3000 Liter. Ein Teil der zur Trinkwassererwärmung erforderlichen Wärme wird dabei häufig aus regenerativen Energien, wie beispielsweise mittels Solarenergie, gewonnen. Diese Wärme wird in der Regel in einem Pufferspeicher zwischengespeichert und dann über einen Pufferwärmetauscher an die übrige Trinkwassererwärmungsanlage übergeben.

Das im Pufferwärmetauscher vorerwärmte Trinkwasser wird zunächst in einem Vorwärmspeicher bei einer mittleren Temperatur gespeichert. Über eine Warmwasserleitung gelangt es in einem Bereitschaftsspeicher, in dem eine weitere Erwärmung des Trinkwassers über einen im Bereitschaftsspeicher integrierten Wärmetauscher erfolgt, der beispielsweise mittels fossiler Brennstoffe mit Wärme versorgt wird. Über einen Heißwasseraustritt des Bereitschaftsspeichers kann dann das heiße Wasser entnommen und einer gewünschten Verwendung zugeführt werden.

Zur Vermeidung der Bildung von Legionellen und anderen Bakterien muss das in der Trinkwassererwärmungsanlage vorhandene Wasser und die mit dem Wasser in Kontakt kommenden Bereiche der Trinkwassererwärmungsanlage zumindest zeitweise auf mindestens 60 °C erwärmt werden. Im Bereitschaftswärmespeicher wird diese Temperatur zwar problemlos erreicht, allerdings kann diese Temperatur im Vorwärmspeicher nicht ohne weiteres gewährleistet werden. Beispielsweise bei geringer Sonneneinstrahlung und damit nur einer geringen Wärmeaufnahme im Pufferwärmetauscher liegt die Temperatur im Vorwärmspeicher unterhalb von 60 °C.

Es ist daher üblich, beispielsweise des Nachts die Trinkwassererwärmungsanlage in einem Desinfektionsmodus zu betreiben, wobei Wasser aus dem Bereitschaftsspeicher über eine zusätzliche Leitung in den Vorwärmspeicher gebracht wird, um dadurch den Vorwärmspeicher zu erwärmen. Dabei erfolgt über eine Legionellenschaltung eine Zirkulation von Wasser zwischen den Bereitschaftsspeicher und den Vorwärmspeicher, für den eine zusätzliche Pumpe vorgesehen ist.

Dadurch ist es zwar möglich, den Vorwärmspeicher auf über 60 °C zumindest zeitweise zu erhöhen, jedoch wird der Pufferwärmetauscher nicht mit erwärmt, so dass dieser möglicherweise eine Temperatur unter 60 °C behält. Dementsprechend werden dort möglicherweise gebildete Legionellen nicht zuverlässig beseitigt.

Ein weiteres Problem tritt dann auf, wenn durch einen Nutzer Wasser entnommen wird und dementsprechend Kaltwasser nachfließt. Dieses kalte Wasser gelangt bei den bekannten Trinkwassererwärmungsanlagen auch während des Desinfektionsmodus über den Pufferwärmetauscher in den Vorwärmspeicher und verhindert oder verlangsamt eine Temperaturerhöhung in diesem Speicher.

Der Erfindung liegt nun die Aufgabe zugrunde, die Nachteile des Stands der Technik zu beseitigen und eine zusätzliche Erwärmung des Vorwärmespeichers zur Verhinderung von Legionellenbildung mit einfachen Mitteln zu ermöglichen. Insbesondere soll ein hydraulischer Aufbau der Trinkwassererwärmungsanlage einfach gehalten werden. Darüber hinaus soll ein Erwärmen des Vorwärmspeichers auch bei nachlaufendem kaltem Wasser möglichst ungestört verlaufen.

Erfindungsgemäß wird diese Aufgabe mit einer Trinkwassererwärmungsanlage mit den Merkmalen des Anspruchs 1 sowie durch ein Verfahren zum Betreiben der Trinkwassererwärmungsanlage mit den Merkmalen des Anspruchs 8 gelöst. Vorteilhafte Weiterbildungen sind den Unteransprüchen zu entnehmen.

Bei einer Trinkwassererwärmungsanlage mit einem Bereitschaftsspeicher, einem Vorwärmspeicher und einem Pufferwärmetauscher, wobei ein Rücklaufausgang des Vorwärmspeichers über eine Rücklaufleitung mit einem Rücklaufeingang des Pufferwärmetauschers und ein Vorlaufausgang des Pufferwärmetauschers über eine Vorlaufleitung mit einem Vorlaufeingang des Vorwärmspeichers und über eine Warmwasserleitung mit einem Warmwassereintritt des Bereitschaftsspeichers verbunden ist, ist erfindungsgemäß vorgesehen, dass ein Heißwasseraustritt des Bereitschaftsspeichers über eine Heißwasserleitung mit dem Vorlaufeingang des Vorlaufspeichers verbunden ist und in der Vorlaufleitung ein Schaltventil angeordnet ist.

Damit ist es möglich, heißes Wasser aus dem Bereitschaftsspeicher zu entnehmen und über die Heißwasserleitung und den Vorlaufeingang in den oberen Teil des Vorwärmspeichers einzubringen. Aus dem in Bezug zum Vorlaufeingang weiter unten angeordneten Rücklaufausgang des Vorwärmspeichers gelangt das Wasser dann in den Pufferwärmetauscher und von dort wieder in den Bereitschaftsspeicher, in dem es weiter erwärmt werden kann. Ein Wiedereintritt des aus dem Vorwärmspeicher ausgetretenen Wassers durch die Vorlaufleitung wird dabei durch das Schaltventil verhindert. Damit ist es möglich, die gesamte Trinkwassererwärmungsanlage mit dem heißen Wasser aus dem Bereitschaftsspeicher zu durchströmen und damit eine Erwärmung auf über 60 °C sicherzustellen, so dass eine Legionellenbildung sicher unterbunden wird. Darüber hinaus weist die Trinkwassererwärmungsanlage einen relativ einfachen Aufbau auf. Im Grunde ist nur ein zusätzliches Schaltventil in der Vorlaufleitung erforderlich. Damit ergibt sich eine vereinfachte hydraulische Schaltung.

Beim Durchströmen des Vorwärmspeichers wird dabei eine Durchströmungsrichtung von oben nach unten erreicht und damit eine bessere, vorteilhafte Temperaturschichtung ermöglicht. Dementsprechend wird der Zeitaufwand zur Erfüllung dieser notwendigen Funktion gegenüber bekanntem Vorgehen verringert.

Auch bei einer zusätzlichen Entnahme von Heißwasser und entsprechendem Zuführen von kaltem Wasser wird die Erwärmung des Vorwärmespeichers nur geringfügig beeinflusst. Ein direktes Einströmen des kalten Wassers in den Vorwärmspeicher wird durch das Schaltventil verhindert. Vielmehr muss dieses kalte Wasser zunächst den Bereitschaftsspeicher durchlaufen und wird dort erwärmt. Damit ergibt sich eine erhöhte Betriebssicherheit.

Der übliche Betrieb der Trinkwassererwärmungsanlage wird durch das zusätzliche Vorsehen der Heißwasserleitung und des Schaltventils nicht gestört. Vielmehr kann im normalen Betrieb das Wasser zwischen dem Vorwärmspeicher und dem Pufferwärmetauscher über die Rücklaufleitung und die Vorlaufleitung und das entsprechend geöffnete Schaltventil umlaufen beziehungsweise bei Entnahme von heißem Wasser aus dem Vorwärmspeicher zum Bereitschaftsspeicher geführt werden.

Vorzugsweise ist in der Rücklaufleitung eine Pumpe angeordnet. Diese Pumpe dient dann zum einen zum Umwälzen des Wassers im Normalbetrieb, zum anderen kann sie bei ausreichender Dimensionierung aber auch verwendet werden, um das Wasser im Desinfektionsmodus zwischen Bereitschaftsspeicher, Vorwärmspeicher und Pufferspeicher umzuwälzen. Eine derartige Pumpe ist häufig ohnehin vorhanden und bildet insbesondere mit dem Pufferwärmetauscher eine Einheit. Dieser Einheit kann insbesondere auch das Schaltventil zugeordnet werden, wobei diese Einheit dann mit relativ geringem Aufwand zur Nachrüstung von bestehenden Trinkwassererwärmungsanlagen verwendet werden kann.

In einer bevorzugten Ausgestaltung mündet eine Kaltwasserzuleitung in die Rücklaufleitung. Über diese Kaltwasserzulaufleitung wird kaltes Wasser zugeführt, um bei Entnahme von heißem Wasser die entnommene Menge auszugleichen. Da die Kaltwasserzuleitung in die Rücklaufleitung mündet, wird sichergestellt, dass das zugeführte kalte Wasser zunächst Wärme im Pufferwärmetauscher aufnehmen kann, bevor es in den Vorwärmspeicher oder sogar direkt in den Bereitschaftsspeicher gelangt.

In einer bevorzugten Ausgestaltung ist in der Heißwasserleitung eine Heißwasserpumpe angeordnet. Dadurch ist es möglich, die in der Rücklaufleitung angeordnete Pumpe geringer zu dimensionieren, da über die Heißwasserpumpe eine Umwälzung des Wassers im Desinfektionsmodus unterstützt wird. Auch ist es mit Hilfe der Heißwasserpumpe möglich, einen Umladevolumenstrom vom Bereitschaftsspeicher zum Vorwärmspeicher zu regeln.

Vorzugsweise ist in der Heißwasserleitung ein Rückschlagventil angeordnet, das eine Durchströmung nur vom Heißwasseraustritt des Bereitschaftsspeichers zum Vorlaufeingang des Vorwärmspeichers zulässt. Ein Fließen des Wassers vom Vorwärmspeicher durch die Heißwasserleitung zum Heißwasseraustritt des Bereitschaftsspeichers wird damit verhindert. Damit wird die Betriebssicherheit erhöht. Das Rückschlagventil kann dabei unterschiedliche Ausgestaltungen besitzen, beispielsweise auch als Schwerkraftbremse ausgebildet sein.

In einer bevorzugten Ausgestaltung ist das Schaltventil als Zweiwegeventil ausgebildet, wobei die Heißwasserleitung zwischen dem Schaltventil und dem Vorlaufeingang des Vorwärmspeichers in die Vorlaufleitung mündet. Das Schaltventil dient dann nur dazu, im Desinfektionsmodus ein Fließen des Wassers vom Pufferwärmetauscher in den Vorwärmspeicher zu verhindern, so dass das Wasser vom Pufferwärmetauscher direkt in den Bereitschaftsspeicher geführt wird. Im normalen Betrieb ist das Schaltventil dagegen geöffnet, so dass das Wasser vom Pufferwärmetauscher in den Vorwärmspeicher gelangen kann. Die Heißwasserleitung kann dabei insbesondere über ein einfaches T-Stück in die Vorlaufleitung eingebunden sein. Ein Fließen des Wassers durch die Heißwasserleitung in den Heißwassereintritt des Bereitschaftsspeichers wird dann gegebenenfalls durch das Rückschlagventil verhindert.

In einer alternativen Ausgestaltung ist das Schaltventil als Dreiwegeventil ausgebildet, wobei die Heißwasserleitung über das Schaltventil in die Vorlaufleitung eingebunden ist. Ein zusätzliches Rückschlagventil in der Heißwasserleitung kann dann entfallen, da das Dreiwegeventil entsprechend geschaltet werden kann, um ein Fließen des Wassers vom Pufferwärmetauscher beziehungsweise vom Vorwärmspeicher über die Heißwasserleitung zum Bereitschaftsspeicher zu verhindern. Damit ergibt sich ein besonders einfacher Aufbau.

Bei einem Verfahren zum Betreiben einer Trinkwassererwärmungsanlage nach einem der Ansprüche 1 bis 7 ist erfindungsgemäß vorgesehen, dass in einem Desinfektionsmodus Wasser aus dem Heißwasseraustritt des Bereitschaftswärmespeichers über den Vorlaufeingang in den Vorwärmspeicher geführt wird und aus dem Vorwärmspeicher über den Pufferwärmetauscher und die Warmwasserleitung zurück in den Bereitschaftswärmespeicher geführt wird, wobei ein Durchfluss durch die Vorlaufleitung vom Pufferwärmetauscher zum Vorlaufeingang geschlossen ist.

Das Schließen der Vorlaufleitung erfolgt dabei insbesondere über ein Schaltventil. Durch dieses Vorgehen wird die gesamte Trinkwassererwärmungsanlage mit Hilfe des heißen Wassers aus dem Bereitschaftswärmespeicher erwärmt, bis dieser eine Temperatur von über 60 °C aufweist. Damit wird eine Legionellenbildung sicher verhindert. Dabei ergeben sich die bereits im Zusammenhang mit der Trinkwassererwärmungsanlage beschriebenen Vorteile.

Zusätzlich kann vorgesehen sein, dass eine Temperatur in der Vorlaufleitung und/oder der Rücklaufleitung erfasst wird und der Desinfektionsmodus beendet wird, wenn die Temperatur mindestens 60 °C beträgt. Damit kann sichergestellt werden, dass der Desinfektionsmodus so lange beibehalten wird, bis eine ausreichende Erwärmung der gesamten Trinkwassererwärmungsanlage erfolgt ist und damit die Legionellenbildung verhindert wird.

Die Erfindung wird im Folgenden anhand bevorzugter Ausführungsbeispiele in Verbindung mit den Zeichnungen näher beschrieben. Hierin zeigen:
- Fig. 1: eine Schaltung einer ersten Ausführungsform der Trinkwassererwärmungsanlage und
- Fig. 2: eine abgewandelte Ausführungsform der Trinkwassererwärmungsanlage.

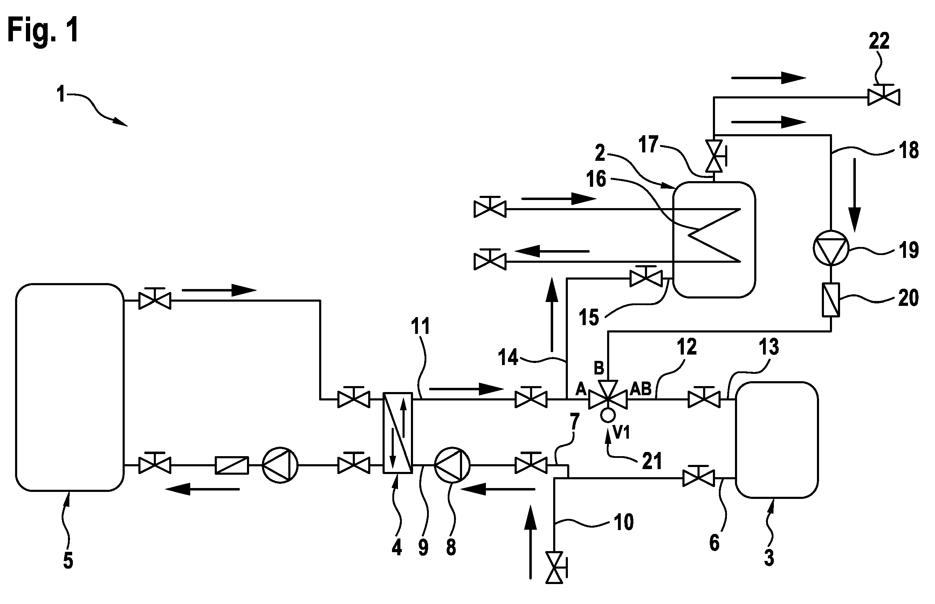

In Figur 1 ist schematisch eine hydraulische Schaltung einer Trinkwassererwärmungsanlage 1 dargestellt.

Die Trinkwassererwärmungsanlage 1 umfasst einen Bereitschaftsspeicher 2, einen Vorwärmspeicher 3 und einen Pufferwärmetauscher 4. Der Pufferwärmetauscher 4 wird aus einem Pufferspeicher 5 beispielsweise einer Solaranlage mit Wärme versorgt und gibt diese Wärme an Wasser der Trinkwassererwärmungsanlage ab.

Ein Rücklaufausgang 6 des Vorwärmspeichers 3 ist über eine Rücklaufleitung 7, in der eine Pumpe 8 angeordnet ist, mit einem Rücklaufeingang 9 des Pufferwärmetauschers 4 verbunden. Dabei mündet in die Rücklaufleitung 7 eine Kaltwasserzuleitung 10, über die frisches Wasser in die Trinkwassererwärmungsanlage 1 nachgeführt werden kann.

Ein Vorlaufausgang 11 des Pufferwärmetauschers 4 ist über eine Vorlaufleitung 12 mit einem Vorlaufeingang 13 des Vorwärmespeichers 3 verbunden. Ferner ist der Vorlaufausgang 11 über eine Warmwasserleitung 14 mit einem Warmwassereintritt 15 des Bereitschaftsspeichers 2 verbunden.

Aus dem Bereitschaftsspeicher 2, in dem eine weitere Erwärmung des Wassers über einen Wärmetauscher 16 erfolgt, kann das Wasser über einen Heißwasseraustritt 17 entnommen werden. Der Heißwasseraustritt 17 ist dabei geodätisch höher angeordnet als der Warmwassereintritt 15. Der Heißwasseraustritt 17 steht in Verbindung mit einer Entnahmestelle 22 zur Entnahme beziehungsweise zur weiteren Verwendung des erhitzten Wassers.

Ferner steht der Heißwasseraustritt 17 mit einer Heißwasserleitung 18 in Verbindung, in der optional eine Heißwasserpumpe 19 sowie gegebenenfalls ein Rückschlagventil 20 angeordnet ist. Die Heißwasserleitung 18 mündet in die Vorlaufleitung 12.

In der Vorlaufleitung 12 ist ein Schaltventil 21 angeordnet, das bei diesem Ausführungsbeispiel als Dreiwegeventil ausgebildet ist und zur Einbindung der Heißwasserleitung 18 in die Vorlaufleitung 12 dient.

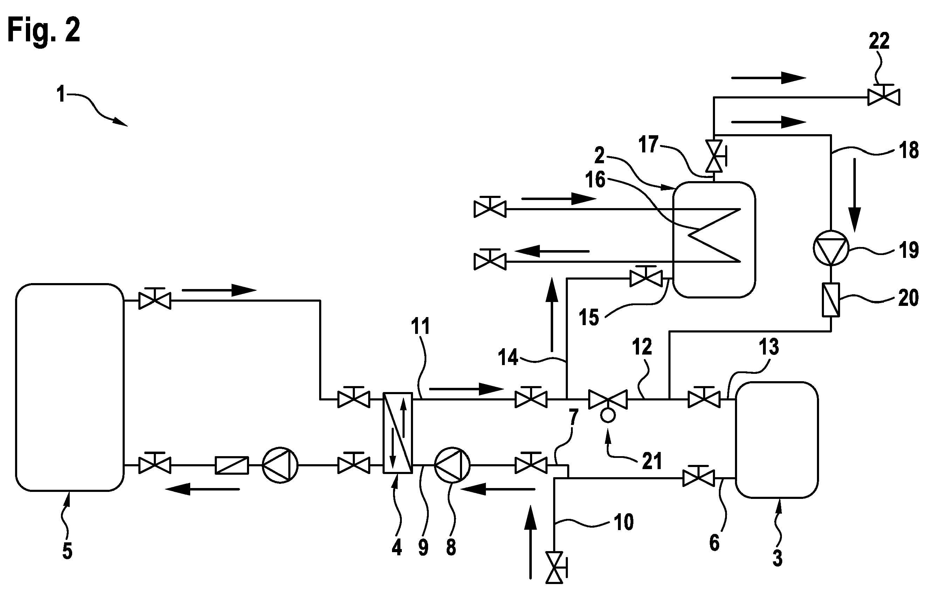

Bei der Ausgestaltung nach Figur 2 ist das Schaltventil 21 im Unterschied zur Ausgestaltung nach Figur 1 als Zweiwegeventil ausgebildet. Die Heißwasserleitung 18 mündet dabei über ein einfaches T-Stück in die Vorlaufleitung 12.

Im Normalbetrieb der Trinkwassererwärmungsanlage ist die Stellung des Schaltventils 21 so, dass Wasser vom Pufferwärmetauscher 4 durch die Vorlaufleitung 12 in den Vorwärmspeicher 3 gelangen kann. Bei einer Ausgestaltung als Dreiwegeventil, wie in Figur 1 dargestellt, ist dann ein Eintritt in die Heißwasserleitung 18 in Richtung Bereitschaftsspeicher 2 durch das Dreiwegeventil 21 versperrt. Zusätzlich kann dies durch das Rückschlagventil 20 blockiert sein.

Bei einer Ausgestaltung des Schaltventils 21 als Zweiwegeventil, wie in Figur 2 gezeigt, wird ein Durchlaufen der Heißwasserleitung 18 in Richtung Bereitschaftsspeicher 2 nur durch das Rückschlagventil 20 verhindert.

Das Wasser kann im Normalbetrieb also vom Pufferwärmetauscher 4 in den Vorwärmspeicher 3 und in den Bereitschaftsspeicher 2 gelangen, wobei ein Durchfluss durch die Heißwasserleitung in Richtung Bereitschaftsspeicher 2 verhindert ist.

Wenn der Vorwärmspeicher 3 und/oder der Pufferwärmetauscher 4 auf über 60 °C erwärmt werden soll, um eine Legionellenbildung zu verhindern, wird die Trinkwassererwärmungsanlage in einem Desinfektionsmodus betrieben. Dabei wird das Schaltventil 21 derartig geschaltet, dass ein Fließen des Wassers vom Pufferwärmetauscher 4 zum Vorwärmspeicher 3 durch die Vorlaufleitung 12 verhindert ist. Das Wasser wird dabei mit Hilfe der Pumpe 8 und gegebenenfalls der Heißwasserpumpe 19 mit hoher Temperatur aus dem Heißwasseraustritt 17 des Bereitschaftsspeichers 2 gefördert und über die Heißwasserleitung 18 und einen Teil der Vorlaufleitung 12 in den Vorlaufeingang 13 und damit in den Vorwärmspeicher 3 geführt. Dabei gelangt das heiße Wasser weit oben in den Vorwärmspeicher 3, da der Vorlaufeingang 13 höher als der Rücklaufausgang 6 angeordnet ist. Das heiße Wasser durchströmt dann den Vorlaufwärmespeicher 3 von oben nach unten und bewirkt damit eine schichtweise Erwärmung. Anschließend gelangt das Wasser über die Rücklaufleitung 7 in den Pufferwärmetauscher 4 und kann auch diesen ausreichend erwärmen, um dort eine Legionellenbildung zu verhindern. Anschließend wird das Wasser über die Warmwasserleitung 14 zurück in den Bereitschaftswärmespeicher 2 geführt und dort erneut erwärmt. Damit ist es möglich, die gesamte Trinkwassererwärmungsanlage ausreichend zu erwärmen, um beispielsweise Legionellenbildung zu vermeiden.

Durch Betrieb der Pumpe 8 in der Rücklaufleitung 7 wird der kühlere Inhalt des Vorwärmspeichers 3 über den beispielsweise nachts inaktiven Pufferwärmetauscher 4 in den Bereitschaftsspeicher 2 gefördert und dort auf mindestens 60 °C erwärmt. Dabei erfolgt sozusagen eine Reihenschaltung von Vorwärmspeicher 3, Pufferwärmetauscher 4 und Bereitschaftsspeicher 2. Eine ausreichende Erwärmung ist dann als erreicht anzusehen wenn im Rücklauf 7 mindestens 60 °C anliegen. Ebenfalls ist dies erreicht, wenn eine entsprechende Temperatur in Strömungsrichtung hinter dem Pufferwärmetauscher 4 erfasst wird.

Durch die erfindungsgemäße Lösung ergibt sich eine vereinfachte hydraulische Schaltung innerhalb der Trinkwassererwärmungsanlage. Dabei wird beim Durchströmen des Vorwärmspeichers in einer Durchströmungsrichtung von oben nach unten während des Desinfektionsmodus eine vorteilhafte Temperaturschichtung erreicht.

Dementsprechend ist zu erwarten, dass innerhalb einer relativ kurzen Zeit eine ausreichende Erwärmung erfolgt. Auch bei einer zeitgleichen Entnahme von Warmwasser an der Entnahmestelle 22, die dazu führt, dass Kaltwasser über die Kaltwasserleitung 10 nachgeführt wird, ist eine ausreichende Erwärmung möglich, da dieses Wasser erst nach Erwärmen im Bereitschaftsspeicher 2 in den Vorwärmspeicher 3 gelangen kann. Die erfindungsgemäße Lösung bietet also eine hohe Betriebssicherheit bei vereinfachtem Aufbau.

## Patentansprüche

1. Trinkwassererwärmungsanlage mit einem Bereitschaftsspeicher (2), einem Vorwärmspeicher (3) und einem Pufferwärmetauscher (4), wobei ein Rücklaufausgang (6) des Vorwärmspeichers (3) über eine Rücklaufleitung (7) mit einem Rücklaufeingang (9) des Pufferwärmetauschers (4) und ein Vorlaufausgang (11) des Pufferwärmetauschers (4) über eine Vorlaufleitung (12) mit einem Vorlaufeingang (13) des Vorwärmspeichers (4) und über eine Warmwasserleitung (14) mit einem Warmwassereintritt (15) des Bereitschaftsspeichers (2) verbunden ist,
**dadurch gekennzeichnet, dass**
ein Heißwasseraustritt (17) des Bereitschaftsspeichers (2) über eine Heißwasserleitung (18) mit dem Vorlaufeingang (13) des Vorwärmspeichers (3) verbunden ist und in der Vorlaufleitung (12) ein Schaltventil (21) angeordnet ist.

2. Trinkwassererwärmungsanlage nach Anspruch 1, **dadurch gekennzeichnet, dass** in der Rücklaufleitung (7) eine Pumpe (8) angeordnet ist.

3. Trinkwassererwärmungsanlage nach Anspruch 1 oder 2, **dadurch gekennzeichnet, dass** eine Kaltwasserzuleitung (10) in die Rücklaufleitung (7) mündet.

4. Trinkwassererwärmungsanlage nach einem der vorhergehenden Ansprüche, **dadurch gekennzeichnet, dass** in der Heißwasserleitung (18) eine Heißwasserpumpe (19) angeordnet ist.

5. Trinkwassererwärmungsanlage nach einem der vorhergehenden Ansprüche, **dadurch gekennzeichnet, dass** in der Heißwasserleitung (18) ein Rückschlagventil (20) angeordnet ist, dass eine Durchströmung nur vom Heißwasseraustritt (17) zum Vorlaufeingang (13) zulässt.

6. Trinkwassererwärmungsanlage nach einem der vorhergehenden Ansprüche, **dadurch gekennzeichnet, dass** das Schaltventil (21) als Zwei-Wege-Ventil ausgebildet ist, wobei die Heißwasserleitung (18) zwischen dem Schaltventil (21) und dem Vorlaufeingang (13) in die Vorlaufleitung (12) mündet und wobei die Warmwasserleitung (14) zwischen dem Schaltventil (21) und dem Vorlaufausgang (11) des Pufferwärmetauschers (4) in die Vorlaufleitung (12) mündet.

7. Trinkwassererwärmungsanlage nach einem der Ansprüche 1 bis 6, **dadurch gekennzeichnet, dass** das Schaltventil (21) als Drei-Wege-Ventil ausgebildet ist, wobei die Heißwasserleitung (18) über das Schaltventil (21) in die Vorlaufleitung (12) eingebunden ist.

8. Verfahren zum Betreiben einer Trinkwassererwärmungsanlage nach einem der vorhergehenden Ansprüche, wobei in einem Desinfektionsmodus Wasser aus dem Heißwasseraustritt (17) des Bereitschaftswärmespeichers (2) über den Vorlaufeingang (13) in den Vorwärmspeicher (3) geführt wird und aus dem Vorwärmspeicher (3) über den Pufferwärmetauscher (4) und die Warmwasserleitung (14) zurück in den Bereitschaftswärmespeicher (2) geführt wird, wobei ein Durchfluss durch die Vorlaufleitung (12) vom Pufferwärmetauscher (4) zum Vorlaufeingang (13) geschlossen ist.

9. Verfahren nach Anspruch 8, **dadurch gekennzeichnet, dass** eine Temperatur in der Vorlaufleitung (12) und/oder der Rücklaufleitung (7) erfasst wird und der Desinfektionsmodus beendet wird, wenn die Temperatur mindestens 60 °C beträgt.

## Claims

1. Drinking water heating system with a standby accumulator (2), a preheating accumulator (3) and a buffer heat exchanger (4), wherein a return outlet (6) of the preheating accumulator (3) is connected via a return line (7) to a return inlet (9) of the buffer heat exchanger (4) and a supply outlet (11) of the buffer heat exchanger (4) is connected via a supply line (12) to a supply inlet (13) of the preheating accumulator (4) and via a warm water line (14) to a warm water inlet (15) of the standby accumulator (2), **characterized in that**
a hot water outlet (17) of the standby accumulator (2) is connected via a hot water line (18) to the supply inlet (13) of the preheating accumulator (3) and a switching valve (21) is arranged in the supply line (12).

2. Drinking water heating system according to Claim 1, **characterized in that** a pump (8) is arranged in the return line (7).

3. Drinking water heating system according to Claim 1 or 2, **characterized in that** a cold water feed line (10) opens into the return line (7).

4. Drinking water heating system according to one of the preceding claims, **characterized in that** a hot water pump (19) is arranged in the hot water line (18).

5. Drinking water heating system according to one of the preceding claims, **characterized in that** a non-return valve (20) is arranged in the hot water line (18), which valve allows a throughflow only from the hot water outlet (17) to the supply inlet (13).

6. Drinking water heating system according to one of the preceding claims, **characterized in that** the switching valve (21) is designed as a two-way valve, wherein the hot water line (18) opens into the supply line (12) between the switching valve (81) and the supply inlet (13) and wherein the warm water line (14) opens into the supply line (12) between the switching valve (21) and the supply outlet (11) of the buffer heat exchanger (4).

7. Drinking water heating system according to one of Claims 1 to 6, **characterized in that** the switching valve (21) is designed as a three-way valve, wherein the hot water line (18) is integrated into the supply line (12) via the switching valve (21).

8. Method for operating a drinking water heating system according to one of the preceding claims, wherein, in a disinfection mode, water is guided into the preheating accumulator (3) from the hot water outlet (17) of the standby heating accumulator (2) via the supply inlet (13) and is guided back into the standby heating accumulator (2) from the preheating accumulator (3) via the buffer heat exchanger (4) and the warm water line (14), wherein a throughflow through the supply line (12) from the buffer heat exchanger (4) to the supply inlet (13) is closed.

9. Method according to Claim 8, **characterized in that** a temperature is detected in the supply line (12) and/or the return line (7) and the disinfection mode is terminated if the temperature is at least 60°C.

## Revendications

1. Installation de chauffage d'eau potable avec un réservoir de réserve (2), un réservoir de préchauffage (3) et un échangeur de chaleur tampon (4), dans laquelle une sortie de retour (6) du réservoir de préchauffage (3) est raccordée par une conduite de retour (7) à une entrée de retour (9) de l'échangeur de chaleur tampon (4) et une sortie d'arrivée (11) de l'échangeur de chaleur tampon (4) est raccordée par une conduite d'arrivée (12) à une entrée d'arrivée (13) du réservoir de préchauffage (4) et par une conduite d'eau chaude (14) à une entrée d'eau chaude (15) du réservoir de réserve (2), **caractérisée en ce qu'**une sortie d'eau très chaude (17) du réservoir de réserve (2) est raccordée par une conduite d'eau très chaude (18) à l'entrée d'arrivée (13) du réservoir de préchauffage (3) et une soupape de commande (21) est disposée dans la conduite d'arrivée (12).

2. Installation de chauffage d'eau potable selon la revendication 1, **caractérisée en ce qu'**une pompe (8) est disposée dans la conduite de retour (7).

3. Installation de chauffage d'eau potable selon la revendication 1 ou 2, **caractérisée en ce qu'**une conduite de fourniture d'eau froide (10) débouche dans la conduite de retour (7).

4. Installation de chauffage d'eau potable selon l'une quelconque des revendications précédentes, **caractérisée en ce qu'**une pompe à eau très chaude (19) est disposée dans la conduite d'eau très chaude (18).

5. Installation de chauffage d'eau potable selon l'une quelconque des revendications précédentes, **caractérisée en ce qu'**un clapet antiretour (20) est disposé dans la conduite d'eau très chaude (18), lequel ne permet un écoulement que depuis la sortie d'eau très chaude (17) vers l'entrée d'arrivée (13).

6. Installation de chauffage d'eau potable selon l'une quelconque des revendications précédentes, **caractérisée en ce que** la soupape de commande (21) est une soupape à deux voies, dans laquelle la conduite d'eau très chaude (18) débouche dans la conduite d'arrivée (12) entre la soupape de commande (21) et l'entrée d'arrivée (13) et dans laquelle la conduite d'eau chaude (14) débouche dans la conduite d'arrivée (12) entre la soupape de commande (21) et la sortie d'arrivée (11) de l'échangeur de chaleur tampon (4).

7. Installation de chauffage d'eau potable selon l'une quelconque des revendications 1 à 6, **caractérisée en ce que** la soupape de commande (21) est une soupape à trois voies, dans laquelle la conduite d'eau très chaude (18) est incorporée dans la conduite d'arrivée (12) par la soupape de commande (21).

8. Procédé de conduite d'une installation de chauffage d'eau potable selon l'une quelconque des revendications précédentes, dans lequel on conduit dans un mode de désinfection de l'eau à partir de la sortie d'eau très chaude (17) du réservoir de réserve (2) via l'entrée d'arrivée (13) dans le réservoir de préchauffage (3) et on la conduit du réservoir de préchauffage (3) par l'échangeur de chaleur tampon (4) et la conduite d'eau chaude (14) en retour dans le réservoir de réserve (2), dans lequel un passage à travers la conduite d'arrivée (12) de l'échangeur de chaleur tampon (4) à l'entrée d'arrivée (13) est fermé.

9. Procédé selon la revendication 8, **caractérisé en ce que** l'on détecte une température dans la conduite d'arrivée (12) et/ou dans la conduite de retour (7) et on termine le mode de désinfection lorsque la température atteint au moins 60°C.
